# EUROPÄISCHE PATENTANMELDUNG

(11) **EP 4 008 848 A2**
(43) Veröffentlichungstag der Anmeldung: **08.06.2022**
(21) Anmeldenummer: 21200026.9
(22) Anmeldetag: 30.09.2021
(51) Int. Cl.: E04C 2/288, E04C 2/04, E04B 1/00, E04C 5/03

(54) **WANDBAUELEMENT, INSBESONDERE FASSADENWAND-BAUELEMENT**

(30) Priorität: 22.09.2020 CH 12022020
(71) Anmelder: Peikko Group Oy, 15101 Lahti (FI)
(72) Erfinder: KAHMER, Herbert, 63526 Erlensee (DE)
(74) Vertreter: reuteler & cie SA

(57) **Zusammenfassung**

Die Erfindung betrifft ein Wandbauelement, insbesondere ein Fassadenwand-Bauelement, mit zueinander in Abstand angeordneten Wandschalen (1,2) und den Abstand zwischen den Wandschalen (1,2) überbrückenden Verbindungselementen, wobei die Verbindungselemente längliche und mit ihren Enden in das Material der Wandschalen eingebettete Verbindungsteile (3) umfassen. Das erfindungsgemäße Wandbauelement ist dadurch gekennzeichnet, dass die Verbindungsteile (3) jeweils an wenigstes einem der beiden Enden eine Profilierung aufweisen, durch die in Längsrichtung des Verbindungsteils (3) einander im Abstand gegenüberliegende Ringflächen (7,8) gebildet sind, welche das einbettende Wandschalenmaterial in entgegengesetzten Längsrichtungen hintergreifen.

## Beschreibung

Die Erfindung betrifft ein Wandbauelement, insbesondere Fassadenwand-Bauelement, mit zueinander im Abstand angeordneten Wandschalen und den Abstand zwischen den Wandschalen überbrückenden Verbindungselementen, wobei die Verbindungselemente längliche, mit ihren Enden in das Material der Wandschalen eingebettete Verbindungsteile umfassen. Die Erfindung betrifft ferner ein z.B. in dem erfindungsgemäßen Wandbauelement einsetzbares Verbindungsteil.

Wandbauelemente der obengenannten Art sind zum Beispiel aus DE 10 2005 041 082 A1 sowie DE 10 2011 014 063 A1 bekannt. Der Erfindung liegt die Aufgabe zugrunde, ein neues solches Wandbauelement zu schaffen, das dynamischen Belastungen, wie sie insbesondere bei Erdbeben auftreten, standhält.

Das diese Aufgabe lösende Wandbauelement nach der Erfindung ist dadurch gekennzeichnet, dass die Verbindungsteile jeweils an wenigstens einem der beiden Enden eine Profilierung aufweisen, durch die in Längsrichtung des Verbindungsteils einander im Abstand gegenüberliegende Ringflächen gebildet sind, welche das einbettende Wandschalenmaterial in entgegengesetzten Längsrichtungen hintergreifen.

Vorteilhaft ist gemäß der Erfindung das Ende des Verbindungsteils im einbettenden Material der Wandschale in Längsrichtung des Verbindungsteils festgelegt, indem bei Hin- und Herbewegungen des Verbindungsteils in Längsrichtung abwechselnd den Ringflächen durch Formschluss eine Haltefunktion zukommt. Vorteilhaft reicht die Tiefe auf der Schalenaußen- oder -innenfläche gebildeter Risse jeweils maximal nur bis an die Ringflächen heran, so dass sich zwischen den Ringflächen ein rissfreier Bereich ergibt.

Als besonders wirksam, insbesondere in Bezug auf die Meidung von Rissbildung, hat sich die erfindungsgemäße Profilierung erwiesen, wenn die Ringflächen symmetrisch in Bezug auf die Mittelebene der betreffenden Wandschale angeordnet werden.

Es versteht sich, dass die Fixierungswirkung durch die das einbettende Wandschalenmaterial hintergreifenden Ringflächen abnimmt, wenn der Abstand, mit dem sich die Ringflächen einander gegenüberliegen, gering wird. In einer bevorzugten Ausführungsform der Erfindung ist der Abstand zwischen den Ringflächen um ein Mehrfaches größer als die Breite der Ringflächen, insbesondere um ein Sechs- bis Achtfaches. Vorzugsweise handelt es sich bei den Ringflächen um Seitenflächen einer Ringnut, wobei die Breite der Ringnut in Längsrichtung des Verbindungsteils um ein Mehrfaches größer als die Nutentiefe ist, insbesondere um ein Zehn- bis Zwölffaches.

Vorzugsweise sind die Verbindungsteile im Wesentlichen bolzenförmig mit kreisförmigem Querschnitt ausgebildet.

In weiterer vorteilhafter Ausgestaltung der Erfindung sind die Ringflächen zur Längsrichtung des Verbindungsteils geneigt und fallen insbesondere zu dem Boden der Ringnut hin ab. Durch Meidung eines scharfkantigen Übergangs zwischen Bolzenoberfläche und Nutenboden wird einer Rissbildung entgegengewirkt.

Die Ringflächen können durch eine Ausnehmung oder/und einen Ringvorsprung von einer zylindrischen Mantelfläche des bolzenförmigen Verbindungsteils gebildet sein.

In einer weiteren bevorzugten Ausführungsform der Erfindung betrifft die Profilierung sowohl Änderungen des Durchmessers des Verbindungsteils als auch Änderungen der Querschnittsform.

So kann der Boden der Ringnut über den Umfang (insbesondere gleichmäßig) verteilte Erhebungen aufweisen, die in Längsrichtung des Verbindungsteils zu einer erheblichen Verstärkung des Reibschlusses zwischen einbettendem Wandschalenmaterial, insbesondere Beton, und dem Verbindungsteil führt.

Bei den Erhebungen kann es sich um Noppen handeln, die im Abstand von den Ringflächen angeordnet sind.

In einer besonders bevorzugten Ausführungsform handelt es sich bei den Erhebungen um in axialer Richtung ausgedehnte Stege, die vorzugsweise an die Ringflächen angrenzen und bis zur Längsmitte der Stege hin ansteigende Rampen bilden.

Vorteilhaft kommt es durch die Noppen und/oder Erhebungen in dem rissfreien Bereich zu einer zusätzlichen Verkeilung zwischen dem Verbindungsteil und dem Schalenmaterial.

Die Erfindung ist nachfolgend anhand von Ausführungsbeispielen und sich auf diese Ausführungsbeispiele beziehenden Zeichnungen weiter erläutert. Es zeigen:
- Fig. 1: eine Teilansicht des erfindungsgemäßen Wandbauelements entsprechend einem ersten Ausführungsbeispiel für die vorliegende Verbindung,
- Fig. 2: eine Teilansicht eines Verbindungsteils für ein erfindungsgemäßes Wandbauelement entsprechend einem zweiten Ausführungsbeispiel für die Erfindung,
- Fig. 3 und 4: eine Komponente einer Gießform zur Herstellung eines Schalenverbindungsteils für ein erfindungsgemäßes Wandbauelement, und
- Fig. 5 und 6: weitere Ausführungsbeispiele für Verbindungsteile.

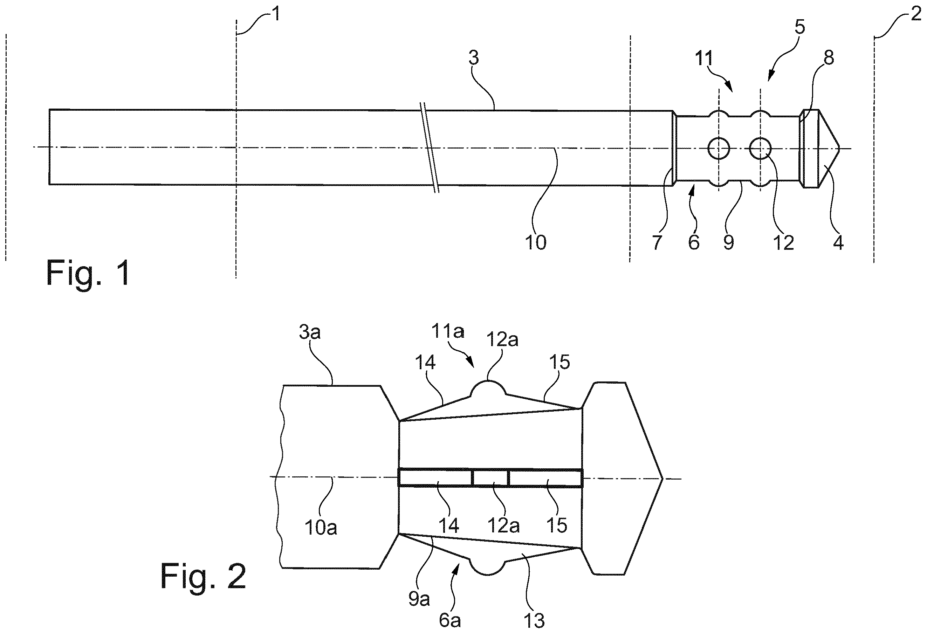

Ein Wandbauelement von Geschosshöhe und mit einer Breite von z.B. 5 Metern umfasst in Fig. 1 durch Strichlinien angedeutete Wandschalen 1 und 2 aus Beton.

Die zueinander parallel und im Abstand angeordneten Wandschalen 1,2 sind durch eine Vielzahl bolzenförmiger Verbindungsteile 3, deren Enden in den Beton der Wandschalen 1,2 eingegossen sind, miteinander verbunden.

Neben den z.B. im Rasterabstand von 40 bis 70 cm angeordneten bolzenförmigen Verbindungsteilen 3 kann das Bauelement weitere Verbindungsteile in Form sich vertikal oder horizontal erstreckender Platten oder Anker aufweisen (nicht gezeigt). Abweichend von der zur Plattenebene senkrechten Anordnung der bolzenförmigen Verbindungsteile 3 können einzelne solcher Verbindungsteile (nicht gezeigt) schräg zur Plattenebene verlaufen, insbesondere derart geneigt, dass das Gewicht einer Wandschale als Vorsatzschale abgetragen wird.

Bei der Wandschale 2 handelt es sich insbesondere um eine mit einer Dämmung verbundene Vorsatzschale. Wie Fig. 1 erkennen lässt, ist das in den Beton der Vorsatzschale eingebettete Ende des Verbindungsteils 3 mit einer konischen Spitze 4 versehen. Neben der konischen Spitze 4 weist dieses Ende ferner einen profilierten Längsabschnitt 5 auf, der durch eine Vertiefung in der Zylinderwand des bolzenförmigen, zur Spitze 4 hin etwas aufgeweiteten Verbindungsteils 3 gebildet und bezogen auf die Dicke der Wandschale 2 symmetrisch angeordnet ist. Das heißt, Anfang und Ende des profilierten Abschnitts 5 sind von der nächstliegenden Wandoberfläche der Wandschale 3 jeweils etwa gleich weit entfernt.

Die Profilierung des Längsabschnitts 5 des Verbindungsteils 3 betrifft sowohl Änderungen des Bolzendurchmessers als auch Änderungen der Form des Bolzenquerschnitts.

In dem gezeigten Beispiel umfasst der profilierte Längsabschnitt 5 des Verbindungsteils 3 eine Ringnut 6 mit Seitenflächen 7 und 8, die zum Boden 9 der Ringnut hin abfallen und mit der Zylinderachse 10 des bolzenförmigen Verbindungsteils 3 einen Winkel von ca. 70° einschließen.

Von dem Nutenboden 9 erstrecken sich Erhebungen 11 in Form von Paaren von Noppen 12, die in Bezug auf eine Mittelebene des Längsabschnitts 5 symmetrisch angeordnet und gleichmäßig über den Umfang des Nutenbodens 9 verteilt sind. Insgesamt sind vier Paare von Noppen 12 gebildet.

Dem profilierten Längsabschnitt 5 kommt vor allem bei dynamischen Belastungen des Wandbauelements, wie sie bei einem Erdbeben auftreten, besondere Bedeutung zu. Insbesondere wirkt diese Profilierung einer von dem eingebetteten Ende des Verbindungsteils 3 ausgehenden, die Stabilität der Wandschale beeinträchtigenden Rissbildung im Beton entgegen.

Bei dynamischer Belastung des Wandbauelements kommt es zur Hin-und-Herbewegung der Wandschale 2 mit einer Komponente in Richtung der Zylinderachse 10 (die auch zur Schalenebene geneigt sein kann). Dabei hintergreifen die Seitenflächen 7 und 8 der Ringnut 6 jeweils abwechselnd das die Ringnut 6 ausfüllende Betonmaterial, sodass sich ein die Wandschale 2 axial auf dem bolzenförmigen Verbindungsteil 3 fixierender Formschluss ergibt. Die Neigung der Flächen 7,8 zur Zylinderachse 10 bzw. Nutenboden 9 ist mit ca. 70° andererseits so gewählt, dass bei Rissbildung die Fixierungswirkung durch die Noppen 12 auf der Erhebung 11 weiter verstärkt wird; durch die Erhebung 11 und Noppen 12 ergibt sich außerhalb des nur bis zur Ringfläche 8 gerissenen Schalenbereichs eine zusätzliche Verkeilung.

Eine stabile Verbindung zwischen der Wandschale 2 und dem Verbindungsteil 3 durch Formschluss wird vor allem dadurch erreicht, dass die Breite der Ringnut 6, d.h. deren axiale Länge, um ein Mehrfaches größer als die Tiefe der Ringnut 6 bzw. die Breite der Seitenflächen 7,8 ist. Die axiale Scherbelastung des Betons bei Hin- und Herbewegung der Wandschale 2 in axialer Richtung verteilt sich damit auf eine größere Länge.

Einer solchen Belastung entgegen wirkt ferner ein erhöhter Reibschluss zwischen dem Beton und dem Nutenboden 9, der durch die Paare von Noppen 12 erreicht wird. Die Noppen 12, die in dem gezeigten Beispiel bündig mit der Zylinderoberfläche des bolzenförmigen Verbindungsteils 3 abschließen, erhöhen vorteilhaft nicht nur den Reibschluss in axialer Richtung, sondern wirken auch einer Drehung des Verbindungsteils um die Zylinderachse 10 relativ zum Beton entgegen.

Ein in Figur 2 gezeigtes Ausführungsbeispiel für ein Verbindungsteil 3a unterscheidet sich von dem vorangehenden Ausführungsbeispiel dadurch, dass der Boden 9a einer Ringnut 6a nicht nur Noppen, sondern Erhebungen 11a mit Noppen 12a und jeweils einem dachartigen Steg 13 mit zu den Noppen 11a in entgegengesetzten Richtungen ansteigenden Rampen 14 und 15 aufweist. In dem gezeigten Ausführungsbeispiel sind vier gleichmäßig um die Zylinderachse 10a verteilt angeordnete solche Erhebungen 11a vorgesehen, die bis an die Seitenflächen 7,8 heranreichen.

Die Erhebungen 11a mit den Noppen 12a und den Rampen 14,15 verbessern erheblich den Reibschluss in axialer Richtung, indem bei axialer Hin- und Herbewegung des Verbindungsteils 3 relativ zur Wandschale 2 der Beton jeweils rampenaufwärts zusammengepresst wird.

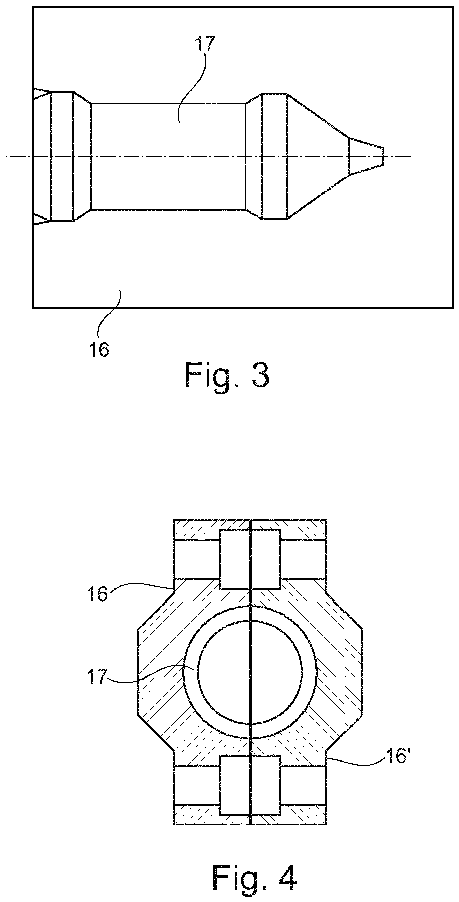

Fig. 3 und 4 zeigen in zwei zueinander senkrechten Ansichten eine Komponente für die Bildung einer Spritzgießform zur Herstellung von Verbindungsteilen, z.B. der vorangehend beschriebenen Verbindungsteile 3.

Bei der Komponente handelt es sich um einen Bestandteil eines Gießform-Baukastens, der ferner eine (nicht gezeigte) Grundplatte mit Ausnehmungen umfasst, in die unter Bildung eines Vielfachwerkzeugs Komponenten gemäß Fig. 3 und 4 einsetzbar sind.

Wie die Fig. 3 und 4 zeigen, sind die Komponenten bzw. Einsätze zweiteilig aus miteinander verschraubbaren Hälftenteilen 16,16' ausgebildet, die einen Formhohlraum 17 für die Bildung eines die Profilierung umfassenden Endteils eines Verbindungsteils 3 bilden.

Zur Entformung eines Verbindungsteils 3 werden die Einsätze den Plattenausnehmungen entnommen und unter Freilegung des Verbindungsteils 3 die Hälftenteile 16,16' voneinander gelöst.

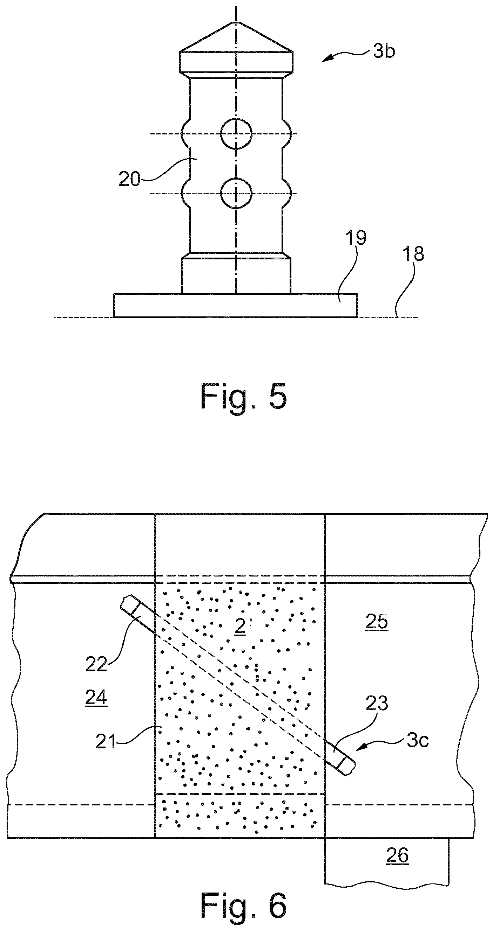

Fig. 5 zeigt ein Verbindungsteil 3b, in Form eines in Betonmaterial einzubettenden Dübels. Der Dübel umfasst eine zu einer Wandoberfläche 18 bündige Grundplatte 19, von der sich ein länglicher Hohlkörper 20 für die Aufnahme einer Schraube erstreckt. Der Hohlkörper 20 kann Profilierungen aufweisen, wie sie vorangehend anhand der Verbindungsteile 3,3a beschrieben sind.

Fig. 6 zeigt ein längliches Verbindungsteil 3c, das einen Isolierkörper 21 aus Kunststoffschaum schräg durchsetzt und beidseitig mit einem Endstück 22 bzw. 23 in den Beton einer Balkonplatte 24 bzw. einer Betondecke 25 innerhalb eines Gebäudes hineinragt, wobei die Decke von einer Wand 26 abgestützt ist. Die Endstücke 22,23 können profiliert sein, wie dies anhand des Verbindungsteils 3,3a und 3b sowie im einleitenden Teil dieser Beschreibung dargelegt ist.

## Patentansprüche

1. Wandbauelement, insbesondere Fassadenwand-Bauelement, mit zueinander in einem Abstand angeordneten Wandschalen (1,2) und den Abstand zwischen den Wandschalen (1,2) überbrückenden Verbindungselementen, wobei die Verbindungselemente längliche, mit ihren Enden in das Material der Wandschalen (1,2) eingebettete Verbindungsteile (3) umfassen,
**dadurch gekennzeichnet,**
**dass** die Verbindungsteile (1,2) jeweils an wenigstens einem der beiden Enden eine Profilierung aufweisen, durch die in Längsrichtung des Verbindungsteils (3) einander im Abstand gegenüberliegende Ringflächen (7,8) gebildet sind, welche das einbettende Wandschalenmaterial in entgegengesetzten Längsrichtungen hintergreifen.

2. Wandbauelement nach Anspruch 1,
**dadurch gekennzeichnet,**
**dass** die Ringflächen (7,8) symmetrisch in Bezug auf die Mittelebene der betreffenden Wandschale (2) angeordnet sind.

3. Wandbauelement nach Anspruch 1 oder 2,
**dadurch gekennzeichnet,**
**dass** der Abstand zwischen den Ringflächen (7,8) um ein Mehrfaches, insbesondere ein Sechs- bis Achtfaches, größer als die jeweilige Breite der Ringflächen (7,8) ist.

4. Wandbauelement nach einem der Ansprüche 1 bis 3,
**dadurch gekennzeichnet,**
**dass** die Ringflächen Seitenflächen (7,8) einer Ringnut (6) mit einem Nutenboden (9) sind.

5. Wandbauelement nach einem der Ansprüche 1 bis 4,
**dadurch gekennzeichnet,**
**dass** die Ringflächen (7,8) zur Längsrichtung des Verbindungsteils (3) geneigt sind und insbesondere zu dem Nutenboden (9) hin abfallen.

6. Wandbauelement nach einem der Ansprüche 1 bis 5,
**dadurch gekennzeichnet,**
**dass** die Ringflächen (7,8) durch eine Ausnehmung oder/und jeweils einen Ringvorsprung von einer zylindrischen Mantelfläche des Verbindungsteils (3) gebildet sind.

7. Wandbauelement nach einem der Ansprüche 1 bis 6,
**dadurch gekennzeichnet.**
**dass** die Profilierung sowohl Änderungen des Durchmessers als auch Änderungen der Querschnittsform des Verbindungsteils (3) betrifft.

8. Wandbauelement nach einem der Ansprüche 4 bis 7,
**dadurch gekennzeichnet,**
**dass** der Boden (9) der Ringnut (6) über den Umfang der Ringnut (6) verteilte Erhebungen (11) aufweist, insbesondere gleichmäßig verteilte Erhebungen.

9. Wandbauelement nach Anspruch 8,
**dadurch gekennzeichnet,**
**dass** die Erhebungen (11) in axialem Abstand zu den Ringflächen (7,8) angeordnete Noppen (12) sind.

10. Wandbauelement nach Anspruch 8 oder 9,
**dadurch gekennzeichnet,**
**dass** die Erhebungen (11) sich in axialer Richtung erstreckende Stege (13) umfassen.

11. Wandbauelement nach Anspruch 10,
**dadurch gekennzeichnet,**
**dass** die Stege (13) unter Bildung von Rampen (14,15) zu ihrer Längsmitte hin ansteigen und insbesondere an die Ringflächen (7,8) angrenzen.

12. Verbindungsteil (3,3a-c), insbesondere für ein Wandbauelement nach einem der Ansprüche 1 bis 11, mit einem länglichen, zur Einbettung in aushärtendes Material mit zumindest einem Ende bestimmten Verbindungskörper,
**dadurch gekennzeichnet,**
**dass** der Verbindungskörper an dem Ende eine Profilierung aufweist, durch die in Längsrichtung des Verbindungskörpers einander im Abstand gegenüberliegende Ringflächen (7,8) gebildet sind, welche das einbettende Material in entgegengesetzten Längsrichtungen hintergreifen.

13. Verbindungsteil nach Anspruch 12, **dadurch gekennzeichnet,**
**dass** das Verbindungsteil (3b) einen in aushärtendes Material, insbesondere Beton, einzugießenden Dübel bildet.

14. Verbindungsteil nach Anspruch 12,
**dadurch gekennzeichnet,**
**dass** das Verbindungsteil (3c) in einem Bauteil zum Anschluss einer auskragenden Betonplatte, insbesondere einer Balkonplatte (24), an eine Betondecke (25) zum Einsatz kommt, wobei das Verbindungsteil (3c) mit einem Ende in die Betondecke (25) und dem anderen Ende in die Betonplatte (24) eingegossen ist.

15. Spritzwerkzeug zur Herstellung von Schalenverbindungsteilen (3) für ein doppelschaliges Wandbauelement gemäß einem der Ansprüche 1 bis 13,
**dadurch gekennzeichnet,**
**dass** das Spritzwerkzeug als Vielfachwerkzeug mit einem Trägerkörper ausgebildet ist, der eine Vielzahl von Ausnehmungen für die Aufnahme mehrteiliger, jeweils einen Formhohlraum (15) bildender Einsätze aufweist, wobei die Einsätze aus den Ausnehmungen entnehmbar und die Teile (14,14') der Einsätze zur Entformung der Schalenverbindungsteile (3) voneinander lösbar sind.
